Europäisches Patentamt

European Patent Office

Office européen des brevets

(19)

(11) Veröffentlichungsnummer : **0 154 934**
**B1**

(12) # EUROPÄISCHE PATENTSCHRIFT

(45) Veröffentlichungstag der Patentschrift :
**13.04.88**

(21) Anmeldenummer : **85102544.5**

(22) Anmeldetag : **06.03.85**

(51) Int. Cl.⁴ : **F 16 L 37/28, F 16 L 37/22**

(54) **Schnellverschlusskupplung.**

(30) Priorität : **16.03.84 DE 3409694**

(43) Veröffentlichungstag der Anmeldung :
**18.09.85 Patentblatt 85/38**

(45) Bekanntmachung des Hinweises auf die Patenterteilung : **13.04.88 Patentblatt 88/15**

(84) Benannte Vertragsstaaten :
**DE FR GB**

(56) Entgegenhaltungen :
**EP-A- 0 051 201**
**EP-A- 0 100 090**
**DE-A- 3 313 257**
**DE-B- 2 854 511**
**GB-A- 1 531 649**

(73) Patentinhaber : **Carl Kurt Walther GmbH & Co. KG**
**Bahnstrasse 43-51 Postfach 11 06 42**
**D-5600 Wuppertal 11 (DE)**

(72) Erfinder : **Momberg, Wolfgang**
**Magdalenenstrasse 50**
**D-5600 Wuppertal 1 (DE)**

(74) Vertreter : **Rieder, Hans-Joachim, Dr.**
**Corneliusstrasse 45 Postfach 11 04 51**
**D-5600 Wuppertal 11 (DE)**

EP 0 154 934 B1

Jouve, 18, rue St-Denis, 75001 Paris, France

## Beschreibung

Die Erfindung betrifft eine Schnellverschlußkupplung nach den Merkmalen des Oberbegriffs des Anspruches 1.

Die Patentanmeldung DE-A-33 13 257 der Anmelderin ist Gegenstand einer derartigen Schnellverschlußkupplung. Dort wird eine parallel zur Stützfläche des Verriegelungsraumes, also schräg ausgerichtete Schulter mittels der Sperrkugeln entgegen Federbelastung in die freigebende Ausweichstellung verlagert. Sinn und Zweck dieser Ausgestaltung ist es, eine bspw. Betankungsmedium führende Leitungen verbindende Kupplung so auszubilden, daß die Kupplungshälften bei an den Leitungen wirkender Zugbelastung, bspw. wenn der Benutzer vergessen hat, den Betankungsschlauch vom fahrzeugseitigen Betankungsstutzen zu lösen, zerstörungsfrei voneinander getrennt werden, so daß keine Leckverluste auftreten. Das bei entsprechender Zugbelastung stattfindende Herausquetschen der Sperrkugeln führt zu partiellen Hochbelastungen von Schulter und Stützfläche.

Bei einer weiterhin bekanntgewordenen Schnellverschlußkupplung (vergl. EP-A-0 051 201) ist eine Ausgestaltung verwirklicht, bei welcher der die Sperrkugeln haltende Käfig entgegen Federbelastung in Trennrichtung der Kupplungshälften verlagerbar ist. Eine vergleichbare Ausführung ist auch aus der EP-A-0 100 090 bekannt. Allerdings ist bei dieser Ausgestaltung der die Sperrkugeln haltende Käfig nicht entgegen der Federbelastung, sondern unter Federbelastung in Trennrichtung der Kupplungshälften verlagerbar.

Aufgabe der Erfindung ist es, eine Schnellverschlußkupplung der eingangs genannten Art in herstellungstechnisch vorteilhafter und baulich einfacher Weise gleichzeitig, in den Mechanismus schonender Weise so auszubilden, daß ein im wesentlichen nur Reibkräften unterworfenes Abreißen bei sogar wählbaren Trennkräften und einfachem Aufbau erreicht wird.

Gelöst ist diese Aufgabe durch die im Anspruch 1 angegebene Erfindung.

Die Unteransprüche sind vorteilhafte. Weiterbildungen der erfindungsgemäßen Schnellverschlußkupplung.

Zufolge solcher Ausgestaltung ist eine gattungsgemäße Schnellverschlußkupplung von erhöhtem Gebrauchs- und Sicherheitswert geschaffen : Beim Entkuppeln als Notfunktion treten nur noch gegenüber den Sperrkugeln und der verschieblichen Hülse wirkende Reibkräfte auf. Die für den jeweiligen Verwendungsfall benötigte Trennkraft läßt sich nun im wesentlichen über die Druckfedern-Auswahl regeln. Die Eingerichtteile unterliegen ausgewogeneren Belastungskräften. Der die Sperrkugeln haltende Käfig wird gegen die zunehmende Federbelastung in Trennrichtung der Kupplungshälften verlagert, bis die Sperrkugeln zur radialen Deckung zu dem in der verschieblichen Hülse angeordneten Ausweichraum gelangen. Gleichzeitig stützen sich in baulich vorteilhafter Weise die verschiebliche Hülse einerends und der Käfig andererends an den beiden Enden einer gemeinsamen Druckfeder ab. Zur Herbeiführung der Kupplungsstellung ist die Ausgestaltung dahingehend realisiert, daß die verschiebliche, die Sperrkugeln in Verriegelungsstellung haltende Hülse von außen her per Hand verlagerbar ist. Durch die entsprechende Verlagerung wird die Kupplungs-Bereitschaftsstellung herbeigeführt, in welcher die Sperrkugeln in den Ausweichraum treten können. Nach Loslassen der Hülse tritt automatisch die Verriegelung ein. In vorteilhafter Weiterbildung wird schließlich noch vorgeschlagen, daß eine sich einerends am Kugelkäfig abstützende zweite Druckfeder höherer Druckkraft anderenends an einem zum Kugelkäfig ortsfesten Widerlager anliegt, relativ zu welchem die verschiebliche Hülse, von der Bewegung des Kugelkäfigs mitgeschleppt, verlagerbar ist bis in eine die weitere Verschiebung blockierende Anschlagstellung. Diese Variante läßt sich vor allem dort gut verwenden, wo in der Praxis bei Abreißkupplungen eine definierte hohe Abreißkraft gefordert wird ; hier wird mit aufgelöster Verriegelungs-Abreißfunktion gearbeitet. Das Kuppeln geschieht gegen die dann zweckmäßig schwächer ausgelegte Druckfeder, so daß die zweite, die Hauptkraft bringende Druckfeder dabei nicht überwunden werden muß. Bei Zugbeanspruchung der einen Kupplungshälfte in axialer Richtung folgt die andere Kupplungshälfte entgegen der Federkraft der größeren Druckfeder bis zum Anschlag. Erst dann weichen die Sperrkugeln in den Ausweichraum der verschieblichen Hülse aus, so daß die eine, bspw. den Stecker tragende Kupplungshälfte freigegeben wird.

Der Gegenstand der Erfindung ist nachstehend anhand zweier zeichnerisch veranschaulichter Ausführungsbeispiele näher erläutert. Es zeigt

Fig. 1 die Schnellverschlußkupplung im Halbschnitt, und zwar in gekuppeltem Zustand, gemäß dem ersten Ausführungsbeispiel,

Fig. 2 eine Herausvergrößerung des die Überlast-Trennstelle bildenden Bereichs unter Darstellung der Trennphase,

Fig. 3 die Schnellverschlußkupplung im Halbschnitt, und zwar ebenfalls in gekuppeltem Zustand, gemäß dem zweiten Ausführungsbeispiel und

Fig. 4 eine der Fig. 2 entsprechende Herausvergrößerung.

Die dargestellte Schnellverschlußkupplung besteht aus den Kupplungshälften I und II.

Die eine Kupplungshälfte I ist als Einsteck-Kupplungsteil gestaltet, d. h. sie besitzt ein zentral liegendes, abgestuft zylindrisch gestaltetes Steckteil 3. Letzteres greift zum Kuppeln in eine formentsprechende Einsecköffnung 4 der anderen Kupplungshälfte II ein.

Beide Kupplungshälften I, II gehen endseitig in je einen Schraubstutzen 5 bzw. 6 über, dies unter Anschluß an je eine nicht näher dargestellte mediumführende Leitung (bspw. für Gas) in Form eines zugfesten Tankschlauchs.

Zwischen dem Steckteil 3 der einen Kupplungshälfte I und der anderen Kupplungshälfte II befindet sich ein Dichtring 7. Letzterer sitzt in der Ringnut 8 eines hülsenförmigen Käfigs K, der sich in Richtung des Schraubstutzens 6 in einen mehrfach abgesetzten Hülsenabschnitt 9 fortsetzt und als ganzes eine Überlast-Sicherungshülse bildet, welche im Inneren der anderen Kupplungshälfte II entgegen Federbelastung anschlagbegrenzt axial verlagerbar angeordnet ist.

Die auf einer Querebene zur Längsmittelachse x-x der Schnellverschlußkupplung in Mehrzahl winkelverteilt angeordneten Sperrkugeln sind mit 10 bezeichnet. Sie lagern in Querbohrungen 11 der zylindrischen Käfigwandung. Die Dicke der die Querbohrungen 11 aufweisenden Käfigwandung ist so gewählt, daß die Sperrkugeln 10, schwimmend eingelagert, beidseitig vortreten können. Zur Einstecköffnung 4 hin verjüngen sich die Bohrungen auf ein lichtes Maß, welches unter dem des Kugeldurchmessers liegt, so daß die Kugeln bei entferntem Steckteil nicht in die Einstecköffnung hineinfallen können.

Die Sperrkugeln 10 wirken in Kupplungsstellung mit einem Verriegelungsraum 12 des Steckteils 3 zusammen, wobei sich die eine Flanke 13 des von einer im Querschnitts trapezförmigen Ringnut gebildeten Verriegelungsraumes 12 abstützt. Diese Flanke erstreckt sich in einem Winkel von ca. 45° zur Längsmittelachse x-x. Die Außenrandkante des Steckteils 3 ist überdies gefast. Die hierdurch erreichte, in Gegenrichtung zur Flanke 13 schräg gestellte Ringschulter steuert die Sperrkugeln 10 radial auswärts. Unter Berücksichtigung der Schrägen der Ringschulter 14 und der Flanke 13 ergibt sich ein Ringwulst trapezförmigen Profils mit steckteilseitig liegender Basis.

In Kupplungsstellung stützen sich die Sperrkugeln 10 an der Innenwandung einer Hülse H ab. Der entsprechende Hülsenabschnitt ist zylindrisch gestaltet und weist axial versetzt in seinem dem Schraubstutzen 5 zugewandten Bereich einen Ausweichraum 15 auf mit einer in Richtung des Schraubstutzens 6 schwächer ansteigenden Flanke 16 und in Gegenrichtung steiler gestellten Flanke 17. Der Schrägungswinkel der schwächer ansteigenden Flanke 18 beträgt ca. 30° zur Längsmittelachse x-x. Die ebenfalls anschlagbegrenzt axial verlagerbare Hülse H setzt sich steckerseitig in einen nach auswärts gerichteten Kragen 18 fort. Dieser steht unter Wirkung einer den Käfig K in Sperrstellung belastenden, die Sperrkugeln 10 nach innen drückenden Druckfeder D 1. Letztere ist als Schraubengangdruckfeder gestaltet und belastet andererseits gegensinnig die Hülse H. Hülsenseitig tritt sie gegen eine Ringstufe 18' des Kragen 18. Das andere Gegenlager bildet die Ringstufe 19' eines Ringbundes 19 des Käfig-Hülsenabschnitts 9.

Die der Kupplungshälfte II zugewandte Stirnwand 20 der Hülse H erstreckt sich in Grundstellung derselben in einem Abstand y vor einer korrespondierenden Ringschulter 21 des Hülsenabschnitts 9, welcher mindestens dem Hub entspricht, den die Sperrkugeln 10 von der Sperrstellung bis auf Höhe des Ausweichraums 15 durchlaufen.

Gehalten wird die in Auswärtsrichtung federbelastete Hülse H durch einen Sprengring 22, gegen den das auswärts gerichtete, abgeschrägte Stirnende der Hülse H tritt. Der Sprengring lagert in einer Nut 23" eines Hülse H und Käfig K lagernden, zylindrisch ausgedrehten Gehäuseabschnitt S 23. Der plane Stirnflächenabschnitt der Hülse H schließt höhengleich mit der Stirnfläche des Gehäuseabschnitts 23 ab, kann sich aber in einen nach außen führenden Hand-Betätigungsabschnitt für die Herbeiführung der Kupplungsstellung fortsetzen.

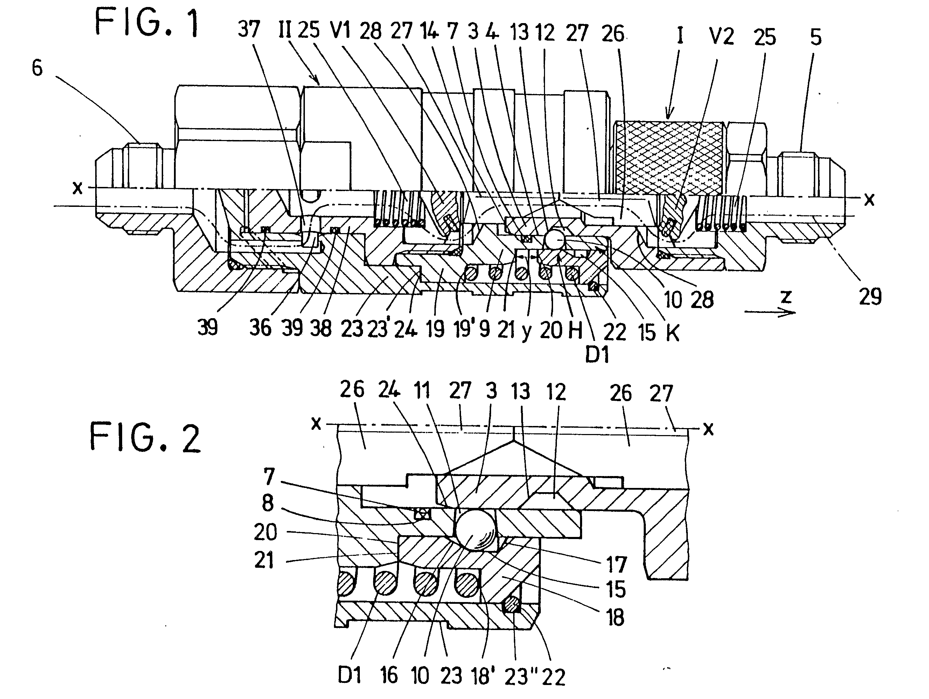

Im Falle einer gewaltsamen Trennung der sich in Schließstellung befindlichen Schnellverschlußkupplung wird durch das Steckteil 3 mittels der durch die Hülse H im Verriegelungsraum 12 gehaltenen Sperrkugeln 10 der Käfig K entgegen der Kraft der Druckfeder D 1 in Richtung des Pfeiles z mitgeschleppt. Sobald die Sperrkugeln in deckungsgleiche Lage zum Ausweichraum 15 der Hülse H treten, steuert die Flanke 13 des Verriegelungsraums 12 die Sperrkugeln radial nach auswärts in den Ausweichraum 15. Die Kupplung reißt ab. Der Käfig K schnellt vermöge der Kraft der Druckfeder D 1 wieder in seine in Fig. 1 gezeigte Ausgangsposition, in der der Hülsenabschnitt 9 mittels seiner querliegenden Ringstufe 24 an einer korrespondierenden Gegenfläche 23' des Gehäuseabschnitts 23 ruht. Die Kupplungs-Bereitschaftsstellung wird bei dieser Ausführungsform einfach dadurch herbeigeführt, daß unter Einführen bspw. einer Schraubendreherklinge die Hülse H entgegen Federbelastung zurückgeschoben wird bis die Sperrkugeln 10 in den Bereich des zuwandernden Ausweichraumes 15 der Hülse H gelangen. Dadurch ist der Weg freigegeben für das Einführen des Steckteils 3. Befindet sich der Verriegelungsraum 12 nun in der Ebene der Sperrkugeln 10, tritt die relativ verschiebliche Hülse H wieder in die aus Fig. 1 ersichtliche anschlagbegrenzte Grundstellung zurück, in der sie mit ihrer zylindrischen Schulter die Sperrkugeln 10 hinterfängt.

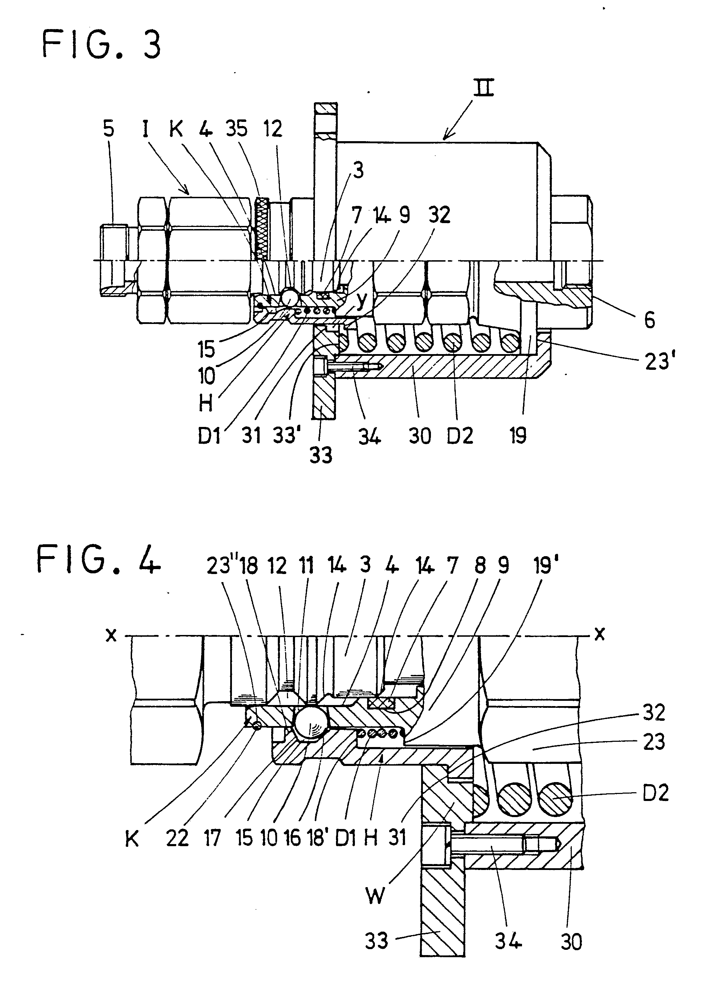

Beide Kupplungshälften tragen je ein in entkuppelter Stellung der Schnellverschlußkupplung sich selbstschließendes Sperrventil V 1 bzw. V 2. Letztere stehen im Sinne der Schließung unter Federbelastung. Die Federn sind mit 25 bezeichnet. Ihre, einen Durchlaßquerschnitt 26 belassenden, axial anschlagbegrenzt geführten Ventilschäfte 27 treten in Kupplungsstellung (Fig. 1 und 3) mit ihren inneren Stirnseiten gegeneinander. Sie heben so die Ventile V 1 bzw. V 2 von der korrespondierenden Ventilsitzfläche 28 der Kupplungshälften I, II ab. Der mit 29 bezeichnete, als Strich-Punkt-Linie markierte Durchflußweg wird so für den Durchlauf des Mediums frei.

Im Falle der Trennung verlieren die Ventilschäfte ihren gegenseitigen Stützhalt, so daß die Ventile V 1 und V 2 sich federbelastet schlagartig schließen. Die ausschließlich in einer nach auswärts gerichteten Komponente wirkenden Trennkräfte halten Belastungen von den Ventilbereichen fern.

Die Ausführungsform gemäß den Fig. 3 und 4 ist prinzipiell gleichen Aufbaues ; jedoch sind die Ventile V 1 und V 2 dort der Sicht entzogen. Die Bezugsziffern sind, zum Teil ohne textliche Wiederholungen, sinngemäß angewandt. Diese Ausführungsform zielt auf eine definierte hohe Abreißkraft ab. Zur Erfüllung dieser Forderung arbeitet sie mit aufgelöster Verriegelungs-Abreißfunktion. Bei Zugbeanspruchung des Steckteils 3 in axialer Richtung folgt die in Sperrstellung gehaltene Hülse H dem von einem Außengehäuse 30 umgebenen Gehäuseabschnitt 23 bis zu einem Anschlag 31 des Außengehäuses. Die Hülse H weist dazu einen Ringbund 32 auf, der sich in Sperrstellung in einem Abstand y zum Anschlag 31 erstreckt, der dem Auslösehub entspricht, also dem Abstand zwischen der Sperrkugelebene und der Ebene des Ausweichraumes 15. Sobald der Ringbund 32 seine Anschlagstellung erreicht hat, setzt der Käfig K bei entsprechender Zugbelastung seinen Weg um dieses Abstandsmaß fort, so daß die Sperrkugeln in den Bereich des Ausweichraumes 15 gelangen. Nach dem Entkuppeln schnellen die Eingerichtteile wieder in die aus Fig. 3 ersichtliche Grundstellung, d. h. der Kragen 19 tritt mit seiner Ringstufe gegen die Gegenfläche 23' des Außengehäuses 30. Die zwischen dem Bund 19 und einer Flanschplatte 33 liegende Druckfeder D 2 ist gegenüber der zwischen der Hülse H und dem Kugelkäfig K sitzenden Druckfeder D 1 von höherer Druckkraft. Diese aufgelöste Funktion hat den Vorteil, daß zur Herbeiführung der Kupplungs-Bereitschaftsstellung die Hülse H gegen eine schwächere Federkraft verlagert werden muß. Die Kraft der Druckfeder D 2 ist vielfach größer als die der Druckfeder D 1. Das eine Ende der Druckfeder D 2 wirkt gegen den Kragen 19 des Kugelkäfigs K bzw. Gehäuseabschnitts 23 und mit dem anderen Ende gegen ein gegenüber dem Kugelkäfig ortsfestes Widerlager W der Flanschplatte 33.

Die Flanschplatte 33 ist gegen die Stirnfläche des topfförmigen Außengehäuses 30 geschraubt. Die Befestigungsschrauben sind mit 34 bezeichnet.

Zur erleichterten Betätigung der Hülse H weist diese im außenliegenden Endbereich einen Greifbund 35 auf. Die Flanschplatte 33 läßt es zu, diese Kupplungshälfte als Festhälfte einzusetzen.

Es ist wichtig, daß in die Abreißkraft keine Reaktionskräfte der Kupplung eingehen, z. B. durch unterschiedlich hohe Betriebsdrücke des Mediums. Aus diesem Grunde wird die eigentliche, vom Hülsenabschnitt 9 gebildete Überlastsicherungshülse (Käfig K) vom Gehäuseabschnitt 23 axialschieberähnlich umfaßt, so daß keine Reaktionskräfte in axialer Richtung durch unterschiedliche Mediendrücke auftreten. Beiderseits eines in der Zeichnung zum ersten Ausführungsbeispiel wiedergegebenen Querkanales 36, der an einen solchen 37 eines auf dem Käfig K aufgeschraubten Gehäusefortsatzes 38 anschließt, liegen Dichtungsringe 39.

Beim zweiten Ausführungsbeispiel ist der am Sprengring 22 anschlagende Kragen 18 einwärts gerichtet. Der Sprengring 22 sitzt dort am Kugelkäfig K.

**Patentansprüche**

1. Schnellverschlußkupplung mit Überlastsicherung zwischen den zwei ineinandersteckbaren Kupplungshälften (I, II), von denen die eine ein Steckteil (3) besitzt und die andere mit radial ausweichbar gelagerten, in einem Verriegelungsraum (12) der einen Kupplungshälfte eingreifenden, von einem Käfig (K) gehaltenen Sperrkugeln (10) ausgestattet ist, welche in Kupplungsstellung von einer Schulter einer verschieblichen Hülse (H) der anderen Kupplungshälfte in Richtung eines Eingriffs in den Verriegelungsraum (12) belastet und in Freigabestellung aus diesem aussteuerbar sind, in welcher Stellung die Sperrkugeln (10) in einen Ausweichraum (15) treten, dadurch gekennzeichnet, daß der die Sperrkugeln (10) haltende Käfig (K) entgegen Federbelastung in Trennrichtung der Kupplungshälften (I, II) verlagerbar ist bis zur radialen Deckung zu dem in der verschieblichen Hülse (H) angeordneten Ausweichraum (15) und daß sich die verschiebliche Hülse (H) einerends und der Käfig (K) andererends an den beiden Enden einer gemeinsamen Druckfeder (D1) abstützen.

2. Schnellverschlußkupplung nach Anspruch 1, dadurch gekennzeichnet, daß die verschiebliche, die Sperrkugel (10) in Verriegelungsstellung haltende Hülse (H) von außen her per Hand verlagerbar ist.

3. Schnellverschlußkupplung nach einem der Ansprüche 1 oder 2, dadurch gekennzeichnet, daß eine sich einerends am Kugelkäfig (K) abstützende zweite Druckfeder (D2) höherer Druckkraft anderenends an einem zum Kugelkäfig (K) ortsfesten Widerlager (W) anliegt, relativ zu welchem die verschiebliche Hülse (H), bei Zugbelastung von der Bewegung des Kugelkäfigs (K) mitgeschleppt, verlagerbar ist bis in eine die weitere Verschiebung blockierende Anschlagstellung (Anschlag 31).

**Claims**

1. Rapid closure coupling, having an overload safeguard between the two mutually insertable coupling halves (I, II), of which one possesses a plug part (3) and the other is equipped with locking balls (10) which are held by a cage (K), are mounted to move aside radially, engage in a locking space (12) of one of the coupling halves, are stressed in the coupling position by a shoulder of a displaceable sleeve (H) of the other coupling half towards engagement in the locking space (12), and can be retracted from the locking space in the release position, in which the locking balls (10) enter a clearance area (15), characterized in that the cage (K) holding the locking balls (10) can be displaced against spring tension in the direction of separation of the coupling halves (I, II) until they overlap radially the clearance space (15) arranged in the displaceable sleeve (H), and in that the displaceable sleeve (H) at one end and the cage (K) at the other end bear on the two ends of a common compression spring (D1).

2. Rapid closure coupling according to Claim 1, characterized in that the displaceable sleeve (H) which retains the locking balls (10) in the locking position can be moved manually from outside.

3. Rapid closure coupling according to one of Claims 1 or 2, characterized in that a second compression spring (D2) of higher compressive force, which bears at one end on the ball cage (K), rests at the other end on an abutment (W) fixed to the ball cage (K), relative to which abutment the displaceable sleeve (H), entrained under tensile stress by the movement of the ball cage (K), can be moved into a stop position (stop 31) which blocks further displacement.

## Revendications

1. Accouplement à fermeture rapide et à sécurité contre les surcharges entre deux demi-accouplements embrochables l'un dans l'autre (I, II) et dont l'un comporte une partie d'insertion (3) tandis que l'autre est équipé de billes de verrouillage (10) maintenues par une cage (K) et susceptibles de se loger par échappement radial dans un espace de verrouillage (12) de l'un des demi-accouplements, ces billes étant repoussées en position d'accouplement par un épaulement d'un manchon coulissant (H) de l'autre demi-accouplement en direction de l'engagement dans la chambre de verrouillage (12) et étant susceptibles d'être ramenées en position de libération par celui-ci, les billes de verrouillage (10) pénétrant dans cette position dans un espace de dégagement (15), caractérisé en ce que la cage (K) portant les billes de verrouillage (10) est susceptible d'être déplacée à l'encontre de la charge élastique dans la direction de séparation des demi-accouplements (I, II) jusqu'à recouvrir radialement l'espace d'évitement (15) prévu dans le manchon (H) et en ce que ce manchon coulissant (H), d'une part, et la cage (K) d'autre part, sont en appui sur les deux extrémités d'un ressort commun (D1).

2. Accouplement à fermeture rapide selon la revendication 1, caractérisé en ce que le manchon coulissant maintenant les billes de verrouillage (10) en position de verrouillage est susceptible d'être repoussé à la main depuis l'extérieur.

3. Accouplement à fermeture rapide selon l'une des revendications 1 ou 2, caractérisé en ce qu'un deuxième ressort de compression (D2) à force de réaction plus importante et s'appuyant d'une part sur la cage des billes (K) est en appui d'autre part sur un contre-appui (W) situé au voisinage de la cage à billes (K), le manchon coulissant (H) étant susceptible d'être déplacé en traction par rapport à ce contre-palier en étant entraîné par le déplacement de la cage des billes (K), ce déplacement s'effectuant jusqu'à une position de butée (butée 31) bloquant la poursuite du déplacement.

FIG. 1

37 II 25 V1 28 27 14 7 3 4 13 12 27 26 I V2 25 5

6

x — x

x — x

Z

39 36 39 38 23 23' 24 19 19' 9 21 y 20 H 22 15 K

D1

10 28

29

FIG. 2

26 24 11 27 3 13 12 26 27

x — x

x — x

7
8
20
21

17
15
18

D1 16 10 23 18' 23" 22

0 154 934

# FIG. 3

# FIG. 4